# EUROPEAN PATENT APPLICATION

(11) **EP 4 290 650 A1**
(43) Date of publication of application: **13.12.2023**
(21) Application number: 22767395.1
(22) Date of filing: 03.03.2022
(51) Int. Cl.: H01M 10/54, C22B 7/00, C01D 15/02, C01D 15/08, C01D 15/04, H01M 10/052

(54) **METHOD FOR RECOVERING LITHIUM PRECURSOR FROM LITHIUM SECONDARY BATTERY**

(30) Priority: 08.03.2021 KR 20210030270
(71) Applicant: SK Innovation Co., Ltd., Seoul 03188 (KR)
(72) Inventor: SEO, Young Bin, Daejeon 34124 (KR); PARK, Ji Yun, Daejeon 34124 (KR); SON, Sung Real, Daejeon 34124 (KR); LEE, Sang Ick, Daejeon 34124 (KR); HONG, Suk Joon, Daejeon 34124 (KR); KIM, Ji Min, Daejeon 34124 (KR)
(74) Representative: Frick, Robert
(86) International application number: PCT/KR2022/002987
(87) International publication number: WO 2022/191499

(57) **Abstract**

In a method for recovering lithium hydroxide from a lithium secondary battery, cathode powder is prepared from a cathode of the lithium secondary battery. A cathode active material mixture is prepared by mixing the cathode powder with a calcium compound. The cathode active material mixture is reduced to form a preliminary precursor mixture. A lithium precursor is recovered from the preliminary precursor mixture. Therefore, a lithium precursor can be obtained with high purity without a complicated leaching process or an additional process, which result from a wet-based acid solution process.

## Description

### 1. Field

The present invention relates to a method for recovering a lithium precursor from a lithium secondary battery. More specifically, the present invention relates to a method for recovering a high purity lithium precursor from a cathode of a waste lithium secondary battery.

### 2. Description of the Related Art

A secondary battery is a battery that can be repeatedly charged and discharged, and is widely applied to portable electronic communication devices such as camcorders, mobile phones, and laptop computers with the development of information communication and display industries. Examples of the secondary battery may include a lithium secondary battery, a nickel-cadmium battery, a nickel-hydrogen battery and the like. Among them, the lithium secondary battery has a high operating voltage and a high energy density per unit weight, and is advantageous in terms of a charging speed and light weight. In this regard, the lithium secondary battery has been actively developed and applied as a power source.

The lithium secondary battery may include: an electrode assembly including a cathode, an anode, and a separation membrane (separator); and an electrolyte in which the electrode assembly is impregnated. In addition, the lithium secondary battery may further include, for example, a pouch-shaped outer case in which the electrode assembly and the electrolyte are housed.

As a cathode active material of the lithium secondary battery, a lithium composite oxide may be used. The lithium composite oxide may further contain transition metals such as nickel, cobalt, manganese and the like.

As the above-described expensive valuable metals are used for the cathode active material, 20% or more of manufacturing costs of the lithium secondary battery is required to manufacture the cathode material. Recently, as the environmental protection issue is emerging, research on a method for recovering a cathode active material is being conducted.

Conventionally, a method for sequentially recovering valuable metals by leaching a waste cathode active material in a strong acid such as sulfuric acid has been used, but the wet process is disadvantageous in terms of regeneration selectivity and regeneration time, and may cause environmental pollution.

For example, Japanese Patent Laid-Open Publication No. 2019-178395 discloses a method for recovering a lithium precursor using a wet method. However, in this case, there is a problem in that a decrease in the purity of impurities generated from other materials and components except for the lithium precursor could not be considered. Therefore, there is a need for research on a method for recovering a high purity lithium precursor using a dry-based reaction.

### SUMMARY

An object of the present invention is to provide a method for recovering a lithium precursor with high purity from a waste lithium secondary battery.

To achieve the above objects, according to an aspect of the present invention, there is provided a method for recovering a lithium precursor from a lithium secondary battery, the method including: preparing cathode powder from a cathode of the lithium secondary battery; preparing a cathode active material mixture by mixing the cathode powder with a calcium compound; reducing the cathode active material mixture to form a preliminary precursor mixture; and recovering a lithium precursor from the preliminary precursor mixture.

The cathode according to some exemplary embodiments may include a waste cathode derived from scrap.

In some exemplary embodiments, the step of preparing the cathode powder may include dry pulverizing the cathode of the lithium secondary battery.

In some exemplary embodiments, the cathode may include a current collector and a cathode active material layer formed on the current collector and including a binder and a cathode active material, and the cathode powder may include components derived from the cathode active material and the binder.

In some exemplary embodiments, the step of preparing the cathode active material mixture or the step of forming the preliminary precursor mixture may include reacting a component derived from the binder with the calcium compound to at least partially remove the component.

In some exemplary embodiments, the component derived from the binder may include a fluorine component and a carbon component.

In some exemplary embodiments, the calcium compound may include calcium oxide.

In some exemplary embodiments, reacting the calcium compound with the cathode powder may include mixing the cathode powder with a calcium compound containing 0.5 to 1.5 times more calcium element than fluorine element contained in the cathode powder.

In some exemplary embodiments, the step of preparing the cathode active material mixture may include performing heat treatment on the cathode powder and the calcium compound together at a temperature of 300 to 600°C, and preferably, at a temperature of 400 to 500°C.

In some exemplary embodiments, the reduction treatment may include dry reduction using a hydrogen gas or a carbon-based material.

In some exemplary embodiments, the reduction treatment temperature may be 400 to 600°C.

In some exemplary embodiments, the step of recovering the lithium precursor from the preliminary precursor mixture may include obtaining a lithium precursor hydrate by washing the preliminary precursor mixture with water.

In some exemplary embodiments, a selectivity of lithium hydroxide in the lithium precursor hydrate may be 97% or more.

According to the above-described exemplary embodiments, the lithium precursor may be recovered from the waste cathode active material through a dry-based process using a dry reduction process, for example. Therefore, a lithium precursor with high purity may be obtained without a complicated leaching process or an additional process, which result from a wet-based process using an acid solution.

According to exemplary embodiments, by mixing a calcium compound with a waste cathode active material, impurities such as hydrogen fluoride and carbon dioxide generated in the dry reduction process may react with calcium first before reacting with lithium, thereby improving a yield of the lithium precursor.

### BRIEF DESCRIPTION OF DRAWINGS

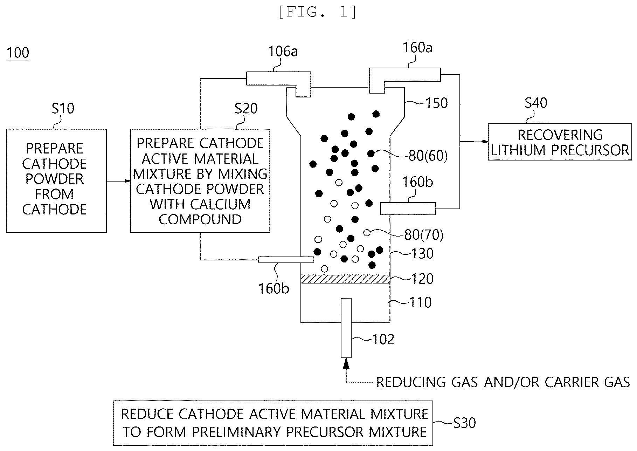

FIG. 1 is a schematic flowchart illustrating a method for recovering a lithium precursor from a lithium secondary battery according to exemplary embodiments.

### DETAILED DESCRIPTION OF THE INVENTION

Embodiments of the present invention provide a method for recovering a high purity lithium precursor with high yield from a lithium secondary battery through a dry reduction reaction.

Hereinafter, exemplary embodiments of the present invention will be described in detail with reference to the accompanying drawings. However, these embodiments are merely an example, and the present invention is not limited to the specific embodiments described as the example.

As used herein, the term "precursor" is used to comprehensively refer to a compound including specific metals to provide the specific metals included in the electrode active material.

As used herein, the term "cathode powder" may refer to a raw material which is input into reduction reaction treatment to be described below after a cathode current collector is substantially removed from the waste cathode.

As used herein, the term "scrap" comprehensively refers to a cathode material scrap generated during a cathode material manufacturing process or lithium ion battery manufacturing process (process scrap) or a cathode material scrap obtained through a separation or screening process from the waste lithium ion battery (waste scrap).

FIG. 1 is a schematic flowchart illustrating a method for recovering a lithium precursor from a lithium secondary battery according to exemplary embodiments. For the convenience of description, FIG. 1 shows a schematic diagram of a reactor together with the process flow.

Referring to FIG. 1, a cathode active material (e.g., cathode powder) may be prepared from the cathode of the lithium secondary battery (e.g., step S10).

The lithium secondary battery may include an electrode assembly including a cathode, an anode, and a separation membrane interposed between the cathode and the anode. The cathode and anode may include a cathode active material layer and an anode active material layer, which are coated on a cathode current collector and an anode current collector, respectively.

For example, the cathode active material included in the cathode active material layer may include an oxide containing lithium and transition metals.

In some embodiments, the cathode active material may include a compound having a composition represented by Formula 1 below.

[Formula 1] LiₓM1ₐM2_{b}M3_{c}O_{y}

In Formula 1, M1, M2 and M3 may be a transition metal selected from Ni, Co, Mn, Na, Mg, Ca, Ti, V, Cr, Cu, Zn, Ge, Sr, Ag, Ba, Zr, Nb, Mo, Al, Ga or B. In Formula 1, x, y, a b and c may be in a range of 0<x≤1.1, 2≤y≤2.02, 0<a<1, 0<b<1, 0<c<1, 0<a+b+c≤1, respectively.

In some embodiments, the cathode active material may be an NCM-based lithium composite oxide including nickel, cobalt and manganese.

A waste cathode may be recovered by separating the cathode from the waste lithium secondary battery. The waste cathode includes a cathode current collector (e.g., aluminum (Al)) and a cathode active material layer as described above, and the cathode active material layer may include a conductive material and a binder together with the above-described cathode active material.

The conductive material may include, for example, a carbon-based material such as graphite, carbon black, graphene, carbon nanotube or the like. The binder may include, for example, a resin material such as vinylidene fluoride-hexafluoropropylene copolymer (PVDF-co-HFP), polyvinylidene fluoride (PVDF), polyacrylonitrile, polymethyl methacrylate or the like.

According to exemplary embodiments, the cathode may include a scrap-derived cathode. The above-described process scraps contain almost no impurities such as carbon, whereas waste scraps further include anode materials in the electrode current collector during a separation or screening process. Therefore, it is difficult to completely remove the materials forming the lithium ion battery due to their characteristics, thereby impurities such as carbon and fluorine are contained in the waste scraps. Cathode powder may be prepared from the scrap-derived cathode containing these impurities.

According to exemplary embodiments, the step of preparing the cathode powder may include dry pulverizing the cathode of the lithium secondary battery. Thereby, the cathode powder may be prepared in a powder form.

In some embodiments, the cathode active material layer may be peeled off from the cathode current collector, and the separated cathode active material layer may be pulverized to generate cathode powder. Accordingly, the cathode powder may be prepared in the powder form, and may be collected in a black powder form, for example.

As described above, the cathode active material particles include lithium-transition metal oxide powder, and may include, for example, NCM-based lithium oxide powder (e.g., Li(NCM)O₂). In this case, M1, M2, and M3 in Formula 1 above may be Ni, Co, and Mn, respectively. In one embodiment, the cathode powder may partially include a component derived from the binder or the conductive material.

That is, according to exemplary embodiments, the cathode may include a current collector and a cathode active material layer formed on the current collector and including a binder and a cathode active material, and the cathode powder may include components derived from the cathode active material and the binder.

In some embodiments, the cathode powder may have an average particle diameter (D50) (average particle diameter in the volume-based cumulative distribution) of 5 to 100 um. Within the above range, a reducing reaction through a fluidized bed reactor to be described below may be easily performed.

For example, in step S20, a cathode active material mixture may be prepared by mixing the cathode powder with a calcium compound.

In some embodiments, the step of preparing the cathode active material mixture or the step of forming a preliminary precursor mixture to be described below may include mixing the cathode powder with the calcium compound to at least partially remove the binder-derived component from the cathode powder.

In some embodiments, components derived from the binder may include a fluorine component and a carbon component. When these fluorine component and carbon component react with lithium, lithium fluoride (LiF) and lithium carbonate (Li₂CO₃) are formed, thereby a yield of the lithium precursor will be decreased. Therefore, when preparing a cathode active material mixture by mixing the calcium compound with cathode powder, the fluorine component and the carbon component may react with calcium first to form calcium fluoride (CaF₂) and calcium carbonate (CaCO₃) during heat treatment or reduction treatment to be described below.

According to exemplary embodiments, the calcium compound preferably includes calcium oxide (CaO). When mixing the calcium oxide with the cathode powder, a reaction of lithium with impurities may be suppressed by first reacting it with calcium before the fluorine component and the carbon component react with lithium, and finally, the yield of the lithium precursor for the purpose of recovery may be improved.

According to exemplary embodiments, reacting the calcium compound with the cathode powder may include mixing the cathode powder with a calcium compound containing 0.5 to 1.5 times more calcium element than fluorine element contained in the cathode powder. Since the reaction with hydrogen fluoride (HF) and carbon dioxide (CO₂) can be optimized within the above range, it may help to improve the recovery rate of the lithium precursor.

In some embodiments, the cathode active material mixture may be subjected to heat treatment before inputting it into a reduction reactor 100 to be described below. Impurities such as the conductive material and the binder included in the waste cathode active material mixture may be removed or reduced by the heat treatment, such that the lithium-transition metal oxide with high purity may be input into the reduction reactor.

According to exemplary embodiments, the step of preparing the cathode active material mixture may include performing heat treatment on the cathode powder and the calcium compound together at a temperature of 300 to 600°C, and preferably at a temperature of 400 to 500°C.

According to exemplary embodiments, the step of preparing the cathode active material mixture may include reacting a component derived from the binder with the calcium compound to at least partially remove the component. The component derived from the binder may include a fluorine component and a carbon component. For example, when performing heat treatment at a temperature of 400 to 600°C, binder-derived components such as hydrogen fluoride and carbon dioxide react with calcium first before lithium to form calcium fluoride (CaF₂) and calcium carbonate (CaCO₃).

The heat treatment may be performed at a temperature of, for example, about 600°C or lower, in one embodiment about 300 to 600°C, and preferably about 400 to 500°C. Within the above range, decomposition and damage of the lithium-transition metal oxide may be prevented while the impurities are substantially removed.

In one embodiment, the heat treatment may be performed in the reduction reactor 100. In this case, a carrier gas such as nitrogen (N₂), helium (He), or argon (Ar) is injected into the reduction reactor 100 through a reaction gas passage 102 connected to a lower portion 110 of the reactor, such that fluidization heat treatment may be performed therein.

In one embodiment, the cathode active material mixture may be separately subjected to heat treatment and then input into the reduction reactor 100.

For example, in step S30, the cathode active material mixture may be reduced in the reduction reactor 100 to form a preliminary precursor mixture 80.

As shown in FIG. 1, the reduction reactor 100 may be divided into a reactor body 130, the lower portion 110 of the reactor and an upper portion 150 of the reactor. The reactor body 130 may include a heating means such as a heater or may be formed integrally with the heating means.

The cathode active material mixture may be supplied into the reactor body 130 through supply passages 106a and 106b. The cathode active material mixture may be dropped through a first supply passage 106a connected to the upper portion 150 of the reactor or introduced through a second supply passage 106b connected to a lower portion of the reactor body 130. In one embodiment, the cathode active material mixture may be supplied by using the first and second supply passages 106a and 106b together.

For example, a support 120 is disposed between the reactor body 130 and the lower portion 110 of the reactor such that powders of the cathode active material mixture may be placed thereon. The support 120 may include pores or injection holes through which a reducing reaction gas and/or the carrier gas passes during reduction treatment to be described below.

The reducing reaction gas for converting the cathode active material mixture into a preliminary precursor may be supplied into the reactor body 130 through the reaction gas passage 102 connected to the lower portion 110 of the reactor.

According to exemplary embodiments, the reduction treatment may include dry reduction using a hydrogen gas or a carbon-based material.

In some embodiments, the reducing gas provided during the reduction treatment may include the hydrogen (H₂) gas. In addition, it is possible to further include a carrier gas such as nitrogen (N₂) or argon (Ar).

In some embodiments a hydrogen concentration in the reducing reaction gas may be about 10 to 40 volume % ("vol %"). The hydrogen concentration may be a volume % of hydrogen in a total volume of the mixed gas.

According to exemplary embodiments, the reduction treatment temperature may be adjusted in a range of about 400 to 800°C, preferably in a range of about 400 to 600°C, and more preferably in a range of about 400 to 500°C.

In addition, during the reduction treatment, process conditions such as the hydrogen concentration, reaction temperature, and reduction reaction time may be finely controlled.

During the reduction treatment, since the hydrogen gas is supplied from the lower portion of the reduction reactor 100 and contacts the cathode active material mixture, the cathode active material mixture may react with the reducing reaction gas while moving to the upper portion 150 of the reactor or staying in the reactor body 130 to be converted into the preliminary precursor mixture 80.

In some embodiments, a fluidized bed may be formed in the reactor body 130 by injecting the hydrogen gas or carrier gas during the reduction treatment. Accordingly, the reduction reactor 100 may be a fluidized bed reactor.

That is, according to exemplary embodiments, the step of forming the preliminary precursor mixture 80 may include performing the reduction treatment on the cathode active material mixture in the fluidized bed reactor.

When performing treatment on the cathode active material mixture in the fluidized bed, a reaction contact time is increased and dispersion of the particles is improved as the mixture repeatedly rises, stays and falls. Thus, the preliminary precursor mixture 80 having a uniform size may be obtained.

However, the concept of the present invention is not necessarily limited to the fluidized bed reaction. For example, a stationary reaction, in which the cathode active material mixture is previously loaded in a batch reactor or a tubular reactor and then the reducing reaction gas is supplied, may be performed.

In some embodiments, when the lithium-transition metal oxide is subjected to the reduction treatment, for example, transition metal preliminary lithium precursor particles 60 including lithium hydroxide (LiOH) and/or lithium oxide (e.g., LiO₂), transition metal or a transition metal oxide may be generated.

For example, as the reduction process progresses, a crystal structure of Li(NCM)O₂ may be collapsed to cause Li to be detached from the crystal structure. Meanwhile, NiO and CoO are generated from the crystal structure, and as the reduction process continues, Ni and Co phases may be generated together.

In particular, as described above, the step of forming the preliminary precursor mixture 80 may include reacting the component derived from the binder with the calcium compound to at least partially remove the component.

The component derived from the binder include the fluorine component and the carbon component, and when these fluorine component and carbon component react with lithium, lithium fluoride (LiF) and lithium carbonate (Li₂CO₃) are formed, and thereby the yield of the lithium precursor will be decreased. Therefore, by including calcium oxide as a calcium compound in the cathode active material mixture, it may be induced so that hydrogen fluoride (HF) and carbon dioxide (CO₂), which are impurities generated during high-temperature reduction treatment, react with calcium first.

Accordingly, calcium fluoride (CaF₂) and calcium carbonate (CaCO₃) may be generated before lithium fluoride (LiF) and lithium carbonate (Li₂CO₃) to improve the yield of the preliminary lithium precursor particles 60 in the preliminary precursor mixture 80, thereby significantly improving the recovery rate of a target product.

After the reduction treatment, the preliminary precursor mixture 80 including the preliminary lithium precursor particles 60 and transition metal-containing particles 70 (e.g., the transition metal or transition metal oxide) may be formed in the reactor body 130. The preliminary lithium precursor particles 60 may include, for example, lithium hydroxide (LiOH), lithium oxide (LiO₂) and/or lithium carbonate (Li carbonate) (LI₂CO₃), and preferably lithium hydroxide (LiOH).

According to exemplary embodiments, the step of recovering the lithium precursor from the preliminary precursor mixture 80 may include obtaining a lithium precursor hydrate by washing the preliminary precursor mixture 80 with water (e.g., process S40).

For example, the preliminary precursor mixture 80 obtained through a dry reduction process may be collected for a subsequent recovery process.

In one embodiment, since the transition metal-containing particles 70 including nickel, cobalt or manganese are relatively heavier than the preliminary lithium precursor particles 60, the preliminary lithium precursor particles 60 may be collected first through outlets 160a and 160b.

In one embodiment, the preliminary lithium precursor particles 60 may be discharged through a first outlet 160a connected to the upper portion 150 of the reactor. In this case, selective recovery of the preliminary lithium precursor particles 60 according to the weight gradient may be facilitated.

In one embodiment, the preliminary precursor mixture 80 including the preliminary lithium precursor particles 60 and the transition metal-containing particles 70 may be collected through a second outlet 160b connected to the reactor body 130. In this case, the preliminary precursor mixture 80 may be directly recovered in a fluidized bed forming region, thereby increasing the yield.

In one embodiment, the preliminary precursor mixture 80 may be collected together through the first and second outlets 160a and 160b.

The preliminary lithium precursor particles 60 collected through the outlet 160 may be recovered as a lithium precursor.

For another example, water (e.g., distilled water) may be directly input into the reactor body 130 to recover the lithium precursor from the preliminary precursor mixture 80 obtained through the dry reduction process.

In some embodiments, the preliminary lithium precursor particles 60 in the preliminary precursor mixture 80 may be washed with water. Through the water washing treatment, the preliminary lithium precursor particles 60 in the form of lithium hydroxide (LiOH) may be substantially dissolved in water and separated from the transition metal precursor to be recovered first. A lithium precursor (lithium precursor hydrate) substantially composed of lithium hydroxide may be obtained through a crystallization process, etc. of the lithium hydroxide dissolved in water.

According to exemplary embodiments, a selectivity of the lithium hydroxide in the lithium precursor hydrate may be 97% or more, 98% or more, or 99% or more. Here, the selectivity may be a molar ratio (mol%) of the lithium hydroxide in the lithium precursor hydrate to lithium in the finally recovered lithium precursor hydrate. Therefore, high purity lithium precursor hydrate may be recovered from the scrap-derived waste cathode.

In one embodiment, the preliminary lithium precursor particles in the form of lithium oxide and lithium carbonate may be substantially removed through the water washing treatment. In one embodiment, the preliminary lithium precursor particles in the form of lithium oxide and lithium carbonate may be at least partially converted into lithium hydroxide through the water washing treatment.

In addition, lithium carbonate (e.g., Li₂CO₃) may be obtained as a lithium precursor by reacting the preliminary lithium precursor particles with a carbon-containing gas such as carbon monoxide (CO) or carbon dioxide (CO₂) as necessary. A crystallized lithium precursor may be obtained through a reaction with the carbon-containing gas. For example, lithium carbonate may be collected by injecting the carbon-containing gas together during the water washing treatment.

A crystallization reaction temperature through the carbon-containing gas may be, for example, in a range of about 60 to 150°C. Within the above temperature range, highly reliable lithium carbonate may be generated without damage to the crystal structure.

As described above, according to exemplary embodiments, the lithium precursor may be recovered from the waste cathode through the continuous dry process.

According to the embodiments of the present invention, since the lithium precursor is collected through the dry reduction reaction which excludes the use of a solution, the yield is increased due to the reduced by-products, and an environmental friendly process design is possible since wastewater treatment is not required.

Hereinafter, experimental examples including specific examples and comparative examples are proposed to facilitate understanding of the present invention. However, the following examples are only given for illustrating the present invention and those skilled in the art will obviously understand that various alterations and modifications are possible within the scope and spirit of the present invention. Such alterations and modifications are duly included in the appended claims.

### Example 1

1 kg of a cathode material separated from scraps was subjected to heat treatment at 450°C for 1 hour. The heat-treated cathode material was cut into small units, and pulverized through milling to obtain Li-Ni-Co-Mn oxide cathode active material powder.

200 g of the cathode active material powder was mixed with 7 g of calcium oxide to prepare a cathode active material mixture, then the mixture was input into a fluidized bed reactor.

Fluidization heat treatment was performed for 3 hours by injecting 100% nitrogen gas from a lower portion of the reactor at a flow rate of 5.5 L/min while maintaining an internal temperature of the reactor at 480°C.

After the heat treatment process, the temperature of the reactor was decreased to 460°C, and a mixed gas of 20 vol% hydrogen/80 vol% nitrogen was injected from the lower portion of the reactor at a flow rate of 5.5 L/min for 4 hours to perform a reduction reaction. At this time, the internal temperature of the fluidized bed reactor was maintained at 460°C. After performing the reduction reaction, the temperature of the reactor was reduced to 25°C, and a preliminary precursor mixture was obtained.

The obtained preliminary precursor mixture and water (19 times; based on the weight) were put together into the reactor and stirred. By analyzing the concentration of lithium dissolved in water, a lithium conversion rate (mol%) was measured through a ratio of the weight of lithium dissolved in water to the weight of lithium in the initial cathode active material powder.

In addition, the selectivity was measured by measuring the molar concentrations of lithium hydroxide, lithium carbonate, and lithium fluoride remaining in the aqueous solution.

### Example 2

The same process as described in Example 1 was performed except that 3.5 g of calcium oxide was mixed. Evaluation results are shown together in Table 1 below.

### Comparative Example

The same process as described in Example 1 was performed except that calcium oxide was not included. Evaluation results are shown together in Table 1 below.

**[TABLE 1]**

| | Unit | Example 1 | Example 2 | Comparative Example |
|---|---|---|---|---|
| Lithium conversion rate | % | 83 | 82 | 78 |
| Selectivity of lithium hydroxide | % | 98.2 | 97.9 | 96.0 |
| Selectivity of lithium carbonate | % | 1.7 | 1.8 | 2.9 |
| Selectivity of lithium fluoride | % | 0.1 | 0.3 | 1.1 |

Referring to Table 1, when including calcium oxide within the range according to the above-described embodiments of the present invention, it could be seen that the selectivity of lithium carbonate and lithium fluoride was remarkably low without reducing the lithium conversion rate in the recovery process. Through this, it can be seen that lithium carbonate and lithium fluoride were converted into calcium carbonate and calcium fluoride, and accordingly, it can be confirmed that the recovery rate (conversion rate × selectivity) of lithium hydroxide, which is a lithium precursor, was significantly increased.

## Claims

1. A method for recovering a lithium precursor from a lithium secondary battery, the method comprising:
preparing cathode powder from a cathode of the lithium secondary battery;
preparing a cathode active material mixture by mixing the cathode powder with a calcium compound;
reducing the cathode active material mixture to form a preliminary precursor mixture; and
recovering a lithium precursor from the preliminary precursor mixture.

2. The method according to claim 1, wherein the cathode comprises a waste cathode derived from scrap.

3. The method according to claim 1, wherein the step of preparing the cathode powder comprises dry pulverizing the cathode of the lithium secondary battery.

4. The method according to claim 1, wherein the cathode comprises a current collector and a cathode active material layer formed on the current collector and including a binder and a cathode active material, and
the cathode powder comprises components derived from the cathode active material and the binder.

5. The method according to claim 4, wherein the step of preparing the cathode active material mixture or the step of forming the preliminary precursor mixture comprises reacting a component derived from the binder with the calcium compound to at least partially remove the component.

6. The method according to claim 5, wherein the component derived from the binder comprises a fluorine component and a carbon component.

7. The method according to claim 5, wherein the calcium compound includes calcium oxide.

8. The method according to claim 1, wherein reacting the calcium compound with the cathode powder comprises mixing the cathode powder with a calcium compound containing 0.5 to 1.5 times more calcium element than fluorine element contained in the cathode powder.

9. The method according to claim 8, wherein the step of preparing the cathode active material mixture comprises performing heat treatment on the cathode powder and the calcium compound together at a temperature of 300 to 600°C.

10. The method according to claim 1, wherein the reduction treatment comprises dry reduction using a hydrogen gas or a carbon-based material.

11. The method according to claim 1, wherein the reduction treatment temperature is 400 to 600°C.

12. The method according to claim 1, wherein the step of recovering the lithium precursor from the preliminary precursor mixture comprises obtaining a lithium precursor hydrate by washing the preliminary precursor mixture with water.

13. The method according to claim 12, wherein a selectivity of lithium hydroxide in the lithium precursor hydrate is 97% or more.
